# EUROPEAN PATENT SPECIFICATION

(11) **EP 1 328 369 B1**
(45) Date of publication and mention of the grant of the patent: **15.09.2004**
(21) Application number: 01987702.6
(22) Date of filing: 18.10.2001
(51) Int. Cl.: B23D 51/16

(54) **JIGSAW COMPRISING A STIFF BEARING FOR THE SAW MOVING MECHANISM**
WIPPSÄGE MIT EINEM STEIFEN LAGER FÜR DEN SÄGENBEWEGUNGSMECHANISMUS
SCIE SAUTEUSE COMPRENANT UN SUPPORT RIGIDE

(30) Priority: 18.10.2000 NL 1016426
(43) Date of publication of application: 23.07.2003
(73) Proprietor: SKIL EUROPE B.V., NL-4825 BD Breda (NL)
(72) Inventor: HOUBEN, Jan, Peter, B-2382 Poppel (BE); VAN DUN, Cornelis, Johannes, Maria, NL-4855 AW Galder (NL)
(74) Representative: Eveleens Maarse, Pieter
(86) International application number: PCT/NL2001/000770
(87) International publication number: WO 2002/032608

(56) References cited:
- DE-A- 19 805 675
- US-A- 2 949 944
- US-A- 3 688 138

## Description

The invention relates to a jigsaw in accordance with the preamble of claim 1.

Such a jigsaw is generally known from the prior art. The bearing means serve to support and guide the saw moving mechanism during the up and downward movement of the saw blade. Commonly the housing of such a jigsaw is made up of, for example, plastic.

In US 2,949,944 an example of a jigsaw with another construction for the housing is given. The housing consists of a rear, intermediate and a front member. The rear member is a box-like member and serves for accomodating the motor. The intermediate member closes the front side of the rear member and has a circumferential side wall to form a transmission compartment. The front member comprises a front wall for the housing and closes the front side of the transmission compartment. The saw moving mechanism comprises a gear shaft which at both sides is journaled in bearings in the front housing member and the intermediate housing member. The housing should be stiff to provide the necessary bearing mounting for the saw moving mechanism. The stiffness is provided by the box-like form of the housing.

The object of the present invention is to provide a jigsaw of the above-identified type with an improved construction for bearing mounting of the saw moving mechanism.

To this end the jigsaw is characterized according to the present invention in that the stiff bearing element is formed by a thin-walled and bent plate element arranged transversely of the main side walls of the housing. Such a thin-walled construction forms together with the walls of the housing a stiff box-like construction, whereby the walls of the housing can take a less rigid form. The desired stiffness is therefore provided in the situation of use so as to ensure that the saw moving mechanism is adequately bearing mounted.

The saw moving mechanism preferably comprises a drive rod which bears on its lower end a fixing for a saw blade, and converting means for converting a rotating movement of the motor into a reciprocating movement of the drive rod, which converting means comprise a gear transmission, wherein a gear shaft of the gear transmission is mounted in the bent plate element on either side of the gear wheel. The stiff bearing element in the form of the bent plate element provides a positioning of the gear shaft in relation to the housing.

In addition, the output shaft of the electric motor is preferably mounted at a distance from the gear shaft in the bent plate element. Thus is ensured that the positions of the output shaft of the electric motor and the gear shaft are fixed in relation to each other in the housing.

The bearing means preferably further comprise a wheel for supporting the saw blade. During sawing a force is exerted on the saw blade which is in a direction opposite to the sawing direction. The wheel then provides support for the saw blade during sawing.

The wheel is preferably located between two flanges to support the saw blade in a direction transversely of the sawing direction.

The flanges preferably form part of a fork which is pivotable relative to the housing. Such a fork is a component of a pendulum mechanism known from the prior art which serves to generate a reciprocating movement of the free end of the saw blade running in sawing direction. Additional sawing effect can be obtained using the pendulum mechanism by pressing in forward sawing direction on the saw blade during the sawing stroke (upward stroke) of the saw blade.

The plate element is preferably continued as a resilient element which is in contact with the drive rod of the saw blade. Use is advantageously made of the thin-walled material of the plate element to obtain a resilient bearing element. The resilient bearing element presses the drive rod with saw blade on the one side against the gear wheel located at the top of the housing and on the other side against the gear wheel located under or at the bottom of the housing.

Finally, the bent plate element is preferably manufactured from metal to enable discharge of the heat generated by the bearing(s) of the gear shaft. In order to discharge extra heat an airflow can be generated along the bent plate element.

The present invention will now be further elucidated with reference to the annexed drawing. In the drawings:
Figure 1 shows a perspective view of the interior of a first embodiment of a jigsaw according to the invention;
Figure 2 shows a view of the jigsaw of Figure 1 in another operating position; and
Figure 3 shows a view according to Figure 1 of a second embodiment of a jigsaw according to the invention.

The jigsaw is provided with a housing 1, a part of which is broken away in the drawing to provide a view of the interior of the jigsaw. In housing 1 is arranged an electric motor 2 for driving a drive rod 3 which bears on its lower end a fixing 4 for a saw blade 5. Electric motor 2 is provided with a motor shaft 6. Between motor shaft 6 and drive rod 3 for saw blade 5 are arranged converting means 7 for converting the rotating movement of electric motor 2 into a reciprocating movement of saw blade 5. Converting means 7 comprise a gear transmission 8 consisting of a first gear wheel 9 connected to motor shaft 6 and a second gear wheel 10 co-acting therewith, and an eccentric 11 arranged on second gear wheel 10. Eccentric 11 co-acts with drive rod 3 to transmit the rotating movement of the second gear wheel 10 as a reciprocating movement of saw blade 5.

The second gear wheel 10 is supported rotatably in housing 1 by means of a gear shaft 12. Gear shaft 12 is rotatably mounted in bearings 13 on either side of second gear wheel 10. Gear shaft 12 herein extends through an opening 14 arranged in drive rod 3. This opening 14 is slot-like, so that a bearing mounting of drive rod 3 on gear shaft 12 is obtained.

The jigsaw is further provided with a stiff bearing element 15 formed by a thin-walled and bent plate element arranged transversely of the walls of housing 1. Plate element 15 is provided with two openings lying in line for passage of gear shaft 12. In addition, plate element 15 contains a third opening for passage of the output shaft 6 of electric motor 2. At the front of housing 1 the plate element 15 is continued as a resilient bearing element 16 which is in contact with drive rod 3 of saw blade 5.

The bearing means further comprise a wheel 17 for supporting saw blade 5. Wheel 17 lies between two flanges 18 which are part of a fork 19 pivotable relative to housing 1. Fork 19 forms part of the pendulum mechanism for generating a reciprocating movement of saw blade 5 in sawing direction. In addition to the fork, the pendulum mechanism further comprises a pusher 20 which is in contact at its top with an eccentric 21 arranged on gear wheel 10. The lower end of pusher 20 is provided with two shoulders 22 which can be placed in contact with the upper surface 23 of fork 19, and a protrusion 24 which is placed in an opening in the upper surface 23 of fork 19. Pusher 20 is finally provided with a hole 25 to allow undisturbed passage of motor shaft 6.

In sawing direction the pusher 20 is retained at the top between gear wheel 10 and plate element 15 and at the bottom in the opening in upper surface 23 of fork 19 by means of protrusion 24. Because pusher 20 is connected to eccentric 21 and retained in the sawing direction, it will execute an oscillating motion transversely thereof, wherein pusher 20 presses each time with its shoulders 22 on the upper surface 23 of fork 19. Fork 19 will herein execute a pivoting movement around a point of rotation 26 by means of which fork 19 is mounted rotatably on housing 1.

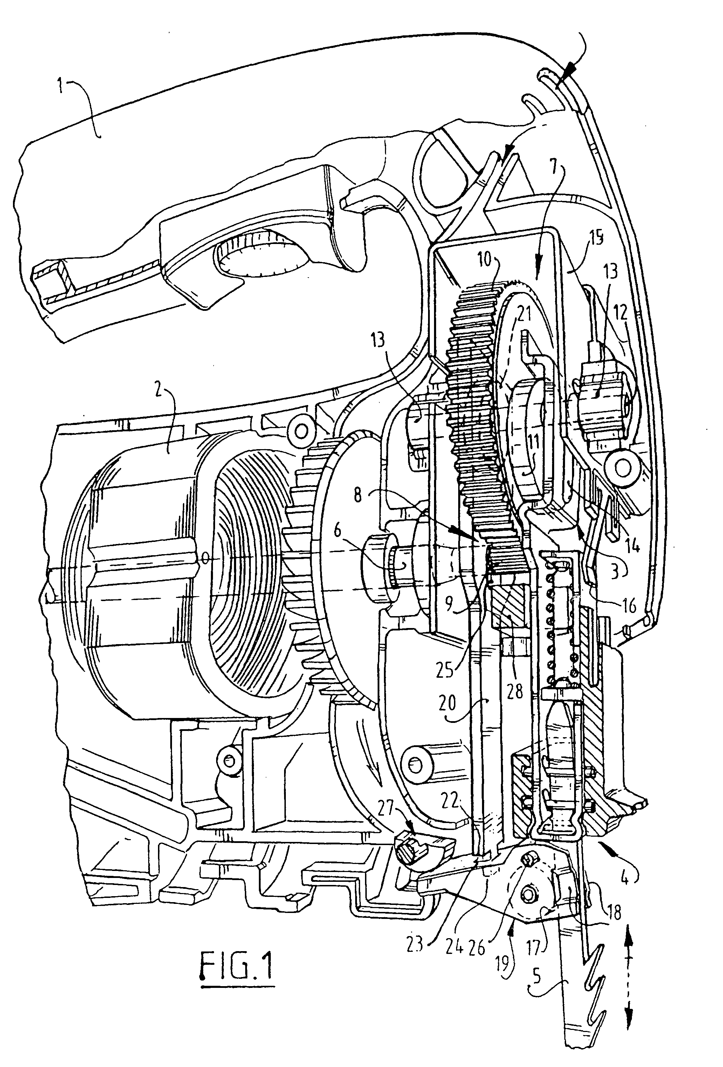

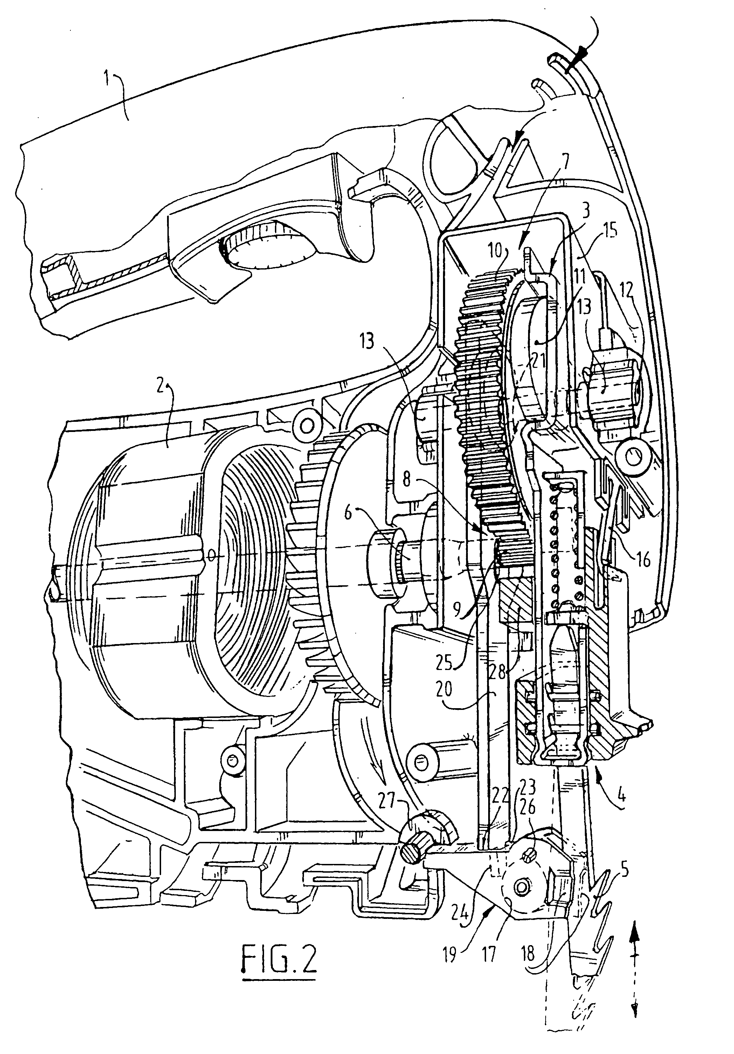

The pendulum mechanism can be disengaged by means of control member 27. In the position shown in Figure 1 the pendulum mechanism is disengaged in that the upper surface 23 of fork 19 is taken out of contact with shoulders 22 of pusher 20 by means of control member 27. In Figure 2 the shoulders 22 on the bottom end of pusher 20 can push on the upper surface 23 of fork 19 and saw blade 5 will execute a pendulum movement.

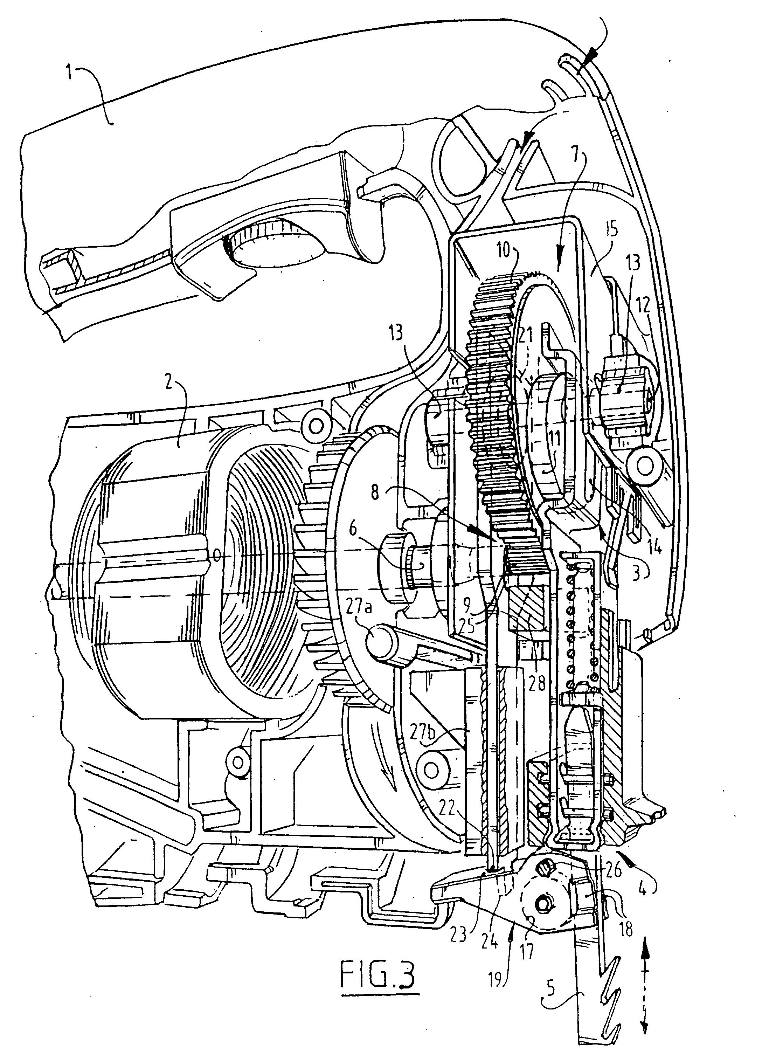

Figure 3 shows a second embodiment of a jigsaw according to the invention. This differs from the first embodiment in that control member 27 for engaging respectively disengaging the pendulum movement of saw blade 5 is formed by a control pin 27a protruding partially from housing 1 and a control block 27b arranged slidably in housing 1. In the position drawn in Figure 3 the pendulum mechanism is on. The pendulum mechanism is disengaged by rotating control pin 27a from the position of Figure 3, whereby control block 27b is pushed downward. With its bottom end the control block 27b herein takes the upper surface 23 of fork 19 out of contact with shoulders 22 of pusher 20, whereupon the pendulum mechanism is off.

Finally, a guide element 28 is placed in housing 1 which serves to guide drive rod 3 when no saw blade 5 is placed in fixing 4. Since drive rod 3 is not bearing mounted on its underside in housing 1 when this bearing mounting is performed by wheel 17 and flanges 18 of fork 19 when a saw blade 5 is connected to drive rod 3, guide element 28 must perform this bearing mounting when there is no saw blade 5 placed in the machine. The resilient element 16 ensures that drive rod 3 with or without saw blade 5 is pressed rearward, and therein guides the up and downward movement of drive rod 3.

## Claims

1. Jigsaw, comprising a housing (1), an electric motor (2) accommodated therein, an output shaft of the electric motor (2) being coupled to a saw moving mechanism for driving a saw blade (5), and means for bearing mounting of the saw moving mechanism, wherein the bearing means comprise a bearing element which is stiff in relation to the housing, **characterized in that** the stiff bearing element is formed by a thin-walled and bent plate element (15) arranged transversely of the main side walls of the housing (1) and provided with two openings lying in line.

2. Jigsaw as claimed in claim 1, wherein the saw moving mechanism comprises a drive rod (3) which bears on its lower end a fixing(4) for a saw blade (5), and converting means (7) for converting a rotating movement of the motor (2) into a reciprocating movement of the drive rod (3), which converting means comprise a gear transmission (8), wherein a gear shaft of the gear transmission is mounted in the bent plate element (15) on either side of the gear wheel (10).

3. Jigsaw as claimed in claim 2, wherein the output shaft (6) of the electric motor (2) is mounted at a distance from the gear shaft (12) in the bent plate element (15).

4. Jigsaw as claimed in any of the claims 1-3, wherein the bearing means further comprise a wheel (17) for supporting the saw blade.

5. Jigsaw as claimed in claim 4, wherein the wheel (17) is located between two flanges (18).

6. Jigsaw as claimed in claim 5, wherein the flanges (18) form part of a fork (19) which is pivotable relative to the housing (1).

7. Jigsaw as claimed in any of the claims 1-6, wherein the plate element (15) is continued as a resilient element (16) which is in contact with the drive rod (3) of the saw blade (5).

8. Jigsaw as claimed in any of the claims 1-7, wherein the bent plate element (15) is manufactured from metal.

## Patentansprüche

1. Stichsäge, aufweisend ein Gehäuse (1), einen darin untergebrachten Elektromotor (2), eine Abtriebswelle des Elektromotors (2), die mit einem Sägebewegungsmechanismus zum Antreiben eines Sägeblattes (5) gekuppelt ist, und Mittel zur Lagerung des Sägebewegungsmechanismus, wobei die Lagermittel ein Lagerelement aufweisen, welches in Bezug auf das Gehäuse steif ist, **dadurch gekennzeichnet, dass** das steife Lagerelement von einem dünnwandigen und gebogenen Plattenelement (15) gebildet wird, das quer zu den Hauptseitenwänden des Gehäuses (1) angeordnet und mit zwei auf einer Linie liegenden Öffnungen versehen ist.

2. Stichsäge nach Anspruch 1, wobei der Sägebewegungsmechanismus eine Antriebsstange (3), welche an ihrem unteren Ende eine Fixierung (4) für ein Sägeblatt (5) trägt, und Umwandlungsmittel (7) zum Umwandeln einer Drehbewegung des Motors (2) in eine Hin- und Herbewegung der Antriebsstange (3) aufweist, welche Umwandlungsmittel ein Zahnradgetriebe (8) aufweisen, wobei eine Getriebewelle des Zahnradgetriebes in dem gebogenen Plattenelement (15) an jeder Seite des Zahnrades (10) montiert ist.

3. Stichsäge nach Anspruch 2, wobei die Abtriebswelle (6) des Elektromotors (2) in einem Abstand von der Getriebewelle (12) in dem gebogenen Plattenelement (15) montiert ist.

4. Stichsäge nach einem der Ansprüche 1-3, wobei die Lagermittel ferner ein Rad (17) zum Abstützen des Sägeblattes aufweisen.

5. Stichsäge nach Anspruch 4, wobei das Rad (17) zwischen zwei Flanschen (18) angeordnet ist.

6. Stichsäge nach Anspruch 5, wobei die Flansche (18) einen Teil einer Gabel (19) bilden, welche relativ zu dem Gehäuse (1) schwenkbar ist.

7. Stichsäge nach einem der Ansprüche 1-6, wobei das Plattenelement (15) als ein federndes Element (16) fortgeführt wird, welches mit der Antriebsstange (3) des Sägeblattes (5) in Kontakt ist.

8. Stichsäge nach einem der Ansprüche 1-7, wobei das gebogene Plattenelement (15) aus Metall hergestellt ist.

## Revendications

1. Scie sauteuse comprenant un boîtier (1), un moteur électrique (2) logé dans celui-ci, un arbre de sortie du moteur électrique (2) couplé à un mécanisme de déplacement de scie pour entraîner la lame de scie (5), et des moyens de montage sur supports du mécanisme de déplacement de la scie, dans laquelle le moyen de support comprend un élément de support qui est rigide par rapport au boîtier, **caractérisée en ce que** l'élément de support rigide est formé par un élément de type plaque courbe et à paroi fine (15) disposé transversalement par rapport aux parois latérales principales du boîtier (1) et comporte deux ouvertures disposées en ligne.

2. Scie sauteuse, telle que revendiquée dans la revendication 1, dans laquelle le mécanisme de déplacement de la scie comprend une tige d'entraînement (3) comportant à son extrémité inférieure une fixation (4) pour lame de scie(5), ainsi que des moyens de conversion (7) permettant de convertir un mouvement rotatif du moteur (2) en un mouvement de va-et-vient de la tige d'entraînement (3), lesquels moyens de conversion comprennent une transmission à engrenages (8) dans laquelle un arbre à engrenage de la transmission à engrenages est monté dans l'élément de type plaque courbe (15) sur l'un ou l'autre côté de la roue à engrenage (10).

3. Scie sauteuse, telle que revendiquée dans la revendication 2, dans laquelle l'arbre de sortie (6) du moteur électrique (2) est monté à une certaine distance de l'arbre à engrenage (12) dans l'élément de type plaque courbe (15).

4. Scie sauteuse, telle que revendiquée dans l'une quelconque des revendications 1 à 3, dans laquelle le moyen de support comprend en outre une roue (17) pour supporter la lame de scie.

5. Scie sauteuse, telle que revendiquée dans la revendication 4, dans laquelle la roue (17) est disposée entre deux flancs (18).

6. Scie sauteuse, telle que revendiquée dans la revendication 5, dans laquelle les flancs (18) font partie d'une fourche (19) qui est pivotante par rapport au boîtier (1).

7. Scie sauteuse, telle que revendiquée dans l'une quelconque des revendications 1 à 6, dans laquelle l'élément de type plaque (15) se prolonge par un élément résilient (16) qui est en contact avec la tige d'entraînement (3) de la lame de scie (5).

8. Scie sauteuse, telle que revendiquée dans l'une quelconque des revendications 1 à 7, dans laquelle l'élément de type plaque courbe (15) est fait à base de métal.
